# EUROPEAN PATENT APPLICATION

(11) **EP 0 856 517 A1**
(43) Date of publication of application: **05.08.1998**
(21) Application number: 97200238.0
(22) Date of filing: 31.01.1997
(51) Int. Cl.: C07F 7/14, C07F 7/08, C08F 8/00, C08F 299/08, C08G 81/02, B01J 31/00

(54) **Hydrosilylation process**

(71) Applicant: DSM N.V., 6411 TE Heerlen (NL)
(72) Inventor: Janssen, Koen Jan Gerarda, 3740 Bilzen (BE); Rademakers, Gerardus Arnoldus, 6416 GT Heerlen (NL)

(57) **Abstract**

The invention relates to a process for the hydrosilylation, with a hydrosilylating compound, of an unsaturated compound under the influence of a catalyst, containing a metal compound of group 8-10 of the Periodic Table of Elements, and an accelerator.

The invention is characterized in that the accelerator is a compound having the formula:

D₄₋ₙ - C - Xₙ

wherein:
- Xₙ =: one or more halides, selected from the group of Cl or Br
- D₄₋ₙ =: one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.

The invention also relates to a storage-stable composition of the hydrosilylation catalyst, which also comprises the above accelerator.

## Description

The invention relates to a process for the hydrosilylation, with a hydrosilylating compound, of an unsaturated compound under the influence of a catalyst, containing a metal compound of Group 8-10 of the Periodic Table of Elements, and an accelerator.

Such a process is known from USP 5,486,637, which describes a reaction of a silicon hydride with an unsaturated reactant in the presence of a platinum catalyst and an accelerator selected from (silated) unsaturated secondary and tertiary alcohols.

This accelerator is said to influence the deactivation of the catalyst prior to the completion of the hydrosilylation reaction. Nevertheless, the reactivity of such a catalytic system is low; the efficiency of the reaction is poor.

The present invention is dealing with the above mentioned problems and presents a solution for said problems, resulting in a process, improved in reactivity and efficiency.

The present invention is characterized in that the accelerator is a compound having the formula:

D₄₋ₙ - C - Xₙ (I)

wherein:
- Xₙ =: one or more halides, selected from the group of Cl or Br
- D₄₋ₙ =: one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.
The different elements of this invention (i.e. the hydrosilylating compound, the unsaturated compound, the catalyst, the accelerator and the process conditions) will be dealt with in the following paragraphs.

### 1) The unsaturated compound

The process of the present invention is dealing with the hydrosilylation of an unsaturated compound. As a result of such a reaction a product is formed in which the unsaturated compound is coupled to the hydrosilylation compound via the reaction: 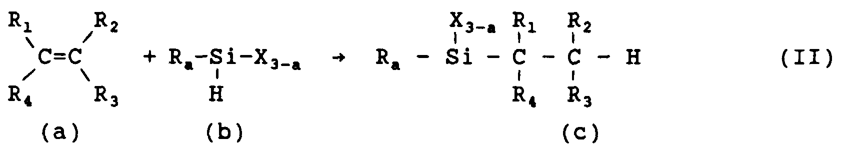 R and X are groups coupled to the Si-atom of the hydrosilylating compound (b), R₁-R₄ are each individually hydrogen, (substituted) hydrocarbyl or a heteroatom containing groups bonded to the double bond of the unsaturated compound (a), and a has a value of 0-3.
The unsaturated compound (a) is here and hereinafter a compound containing at least one carbon-carbon double bond. It includes lineair and branched alkene compounds as well as cycloalkene compounds; it also, and preferably, includes polymers containing at least one carbon-carbon double bond (i.e. the unsaturated compound is of a polymeric nature). This carbon-carbon double bond reacts in the process according to the present invention with the silicon-hydrogen bond present in the hydrosilylation compound (b).

Examples of unsaturated compounds are α-olefins (like ethylene, propylene, isobutene, pentene, octene and the like); internal olefins, cycloalkenes (like cyclohexene, cyclooctene, methylcyclopentadiene). In general every chemical compound containing a carbon-carbon double bond (C=C) is capable of undergoing a hydrosilylation. This is also the case for functionalized unsaturated compounds (like vinylchloride, allylalcohol, acrylonitril). The unsaturated compound can also be an unsaturated silicon containing compound (like vinylsilane). Another possibility is that the unsaturated compound contains an alkyn group (-C≡C-), which can also be subjected to a hydro-silylation reaction. The above mentioned USP 5,486,637 gives more examples of suitable unsaturated compounds.

The unsaturated compound can also be of a polymeric nature, and is preferably a polyolefin. The term polyolefin as used in the practice of the present invention refers to and includes homo- and copolymers of 1-alkenes generally, and refers preferably to ethylene/ propylene copolymers or copolymers of ethylene and propylene with other 1-alkenes, as well as to copolymers formed by the interpolymerization of ethylene, 1-alkenes and at least one other polyene monomer. Such polymers are themselves well known to those skilled in the art and are typically prepared by using conventional Ziegler or metallocene polymerization techniques well known to those skilled in the art. Also the process as disclosed in WO 96-23010 is suitable.

As will be appreciated by those skilled in the art, while propylene is a preferred monomer for copolymerization with ethylene and optionally a diene monomer, it will be understood that in place of propylene, use can be made of other 1-alkenes containing 4 to 16 carbon atoms. The use of such higher 1-alkenes together with or in place of propylene are well known to those skilled in the art and include, particularly, 1-butene, 1-pentene, 1-hexene and 1-octene.

When the unsaturated compound is an interpolymer of ethylene, 1-alkene and a polyene monomer, use can be made of a variety of polyene monomers known to those skilled in the art containing two or more carbon-to-carbon double bonds containing 4 to 20 carbon atoms, including non-cyclic polyene monomers, monocyclic polyene monomers and polycyclic polyene monomers. Representative of such compounds include 1,4-hexadiene, dicyclopentadiene, bicyclo(2,2,1)hepta-2,5-diene, commonly known as norbornadiene, as well as the alkenyl norbornenes wherein the alkenyl group contains 1 to 20 carbon atoms and preferably 1 to 12 carbon atoms. Examples of some of the latter compounds includes 5-methylene-2-norbornene, 5-ethylidene-2-norbornene, vinyl norbornene as well as alkyl norbornadienes. As known to those skilled in the art, it is

also possible to include as a comonomer (via the polymerization of the polyolefin with certain Ziegler-Natta catalyst systems) a small amount, typically up to 10 percent, of a functional ethylenically unsaturated monomer. Such monomers typically contain 2 to 20 carbon atoms and contain an ethylenically unsaturated group. Preferred functional ethylenically unsaturated monomers include acrylate and methacrylate esters wherein the ester group is C₁ to C₂₀ alkyl or C₆ to C₂₅ aryl including substituted aryl, vinylcyano compounds and vinyl esters. Representative of suitable functional monomers which can be used in the practice of the present invention include methylmethacrylate, methylacrylate, N-vinylpyridine, acrylonitril, vinyl acetate, etc.

In a particular practice of the present invention, the unsaturated compound is a polyolefin, produced using a metallocene catalyst system. As used herein, the term "metallocene catalyst system" refers to and includes the use of a transition metal compound comprising a metal from groups 3-6 of the Periodic Table, such as titanium, zirconium, chromium, hafnium, yttrium containing at least one coordina-ting ligand that is a highly conjugated organic compound (e.g., cyclopentadienyl or indenyl). Such catalyst systems are themselves known and are described in EP-A-347,129; EP-A-69,951; EP-A-468,537; EP-A-500,944; and PCT/NL/93/00229. In addition, other Ziegler catalyst systems likewise known in the art as producing (terminal) unsaturation can likewise be used to yield the unsaturated compound, useful in the practice of this invention. One such example is titanium chloride supported on magnesium chloride and used in high temperature (greater than 100°C) polymerization systems. Another example is the copolymerization of ethylene with higher 1-alkenes using VOCl₃ and diethylaluminum chloride. In general, the choice of catalyst system and polymerization conditions will depend on the specific type of polyolefin desired, as known to those skilled in the art of (Ziegler-Natta) polymerization technology. Thus, the composition of the polyolefin is dependent on the limits of Ziegler-Natta polymerization technology and can be controlled independently. Preference is given to polyolefins containing predominantly terminal unsaturations.

According to the present invention, not only polyolefins containing a C=C double bond in the polymer structure, but any polymeric product containing such a double bond can be used as the unsaturated compound. Other examples of such a polymeric unsaturated compound are unsaturated (co)polyesters, polyisoprene, polyisobutylene or nitril-butadiene rubbers.

The molecular weight of the unsaturated polymer can be varied; similarly, the method of preparation of the polymer can be used to, in part, control the properties of the polymer. In general, the number-average molecular weight, Mₙ (expressed in grams/mol), can be varied within broad limits, depending on the properties desired. As a general rule, use is made of a polymer having a Mₙ between 50 and 100,000, and preferably between 100 and 80,000. It is generally preferred that the molecular weight distribution (MWD) of the polymer be controlled to a level of at least 1.0, referring to the ratio between the weight-average molecular weight (M_{w}) and the number-average molecular weight (Mₙ), both as determined by size exclusion chromatography-differential viscometry (SEC-DV).

### 2) The hydrosilylating compound

The hydrosilylating compound (here and hereinafter also called a silicon hydride) applicable according to the present invention can also be of a monomeric or polymeric nature. In monomeric form the hydrosilylating compound is a hydrosilane of the formula: 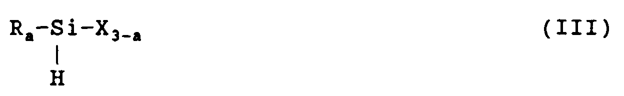 where each symbol has the following meaning: X is a group containing a heteroatom, such as P, O, S, N, Si, halogen or one or more carbon atoms either as part of an aliphatic or of an aromatic group; R is hydrogen or an organic group, and preferably hydrogen, alkyl, aryl, cyclo-alkyl, alkoxy, aryloxy or cycloalkoxy; and a = 0-3.

Preferably the X-group, when present, is an alkoxy or a halide and more preferred chlorine. Also preferred is that the R-group, when present, is a hydrocarbon containing group containing 1-6 C-atoms.

Next to the above described silicon hydride (III), use can also be made, as the hydrosilylating compound, of a silicon hydride in the form of a hydrosilazane. Examples thereof are octaalkylcyclotetrahydrosilazane: 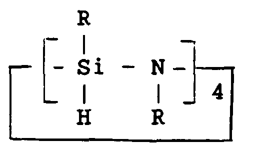 or 1,1,3,3 tetraalkyldihydrosilazane:

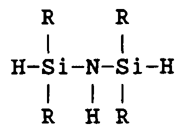

In polymeric form, use can be made of a polyhydrosiloxane or a polyhydrosilazane as the hydrosilylating compound. One suitable class of polymeric silicon hydrides useful in the practice of the present invention are polyhydrosilane polymers and copolymers containing a large number of repeating units containing a silicon-hydrogen bond. In general, it is preferred to use silicon-containing polymers having repeating units of the general formula: 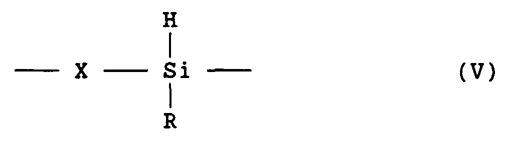 wherein X is a group containing a heteroatom, such as P, O, S, N, Si or one or more carbon atoms either as part of an aliphatic or aromatic group and R is hydrogen or an organic group, and preferably hydrogen, alkyl, aryl, cycloalkyl, alkoxy, aryloxy or cycloalkoxy.

Illustrative are polyhydrosiloxanes derived from an alkylhydrosiloxane end-capped with either a hydrosilane functionality or an alkylsilane functionality. Such polyhydrosiloxanes have the general formula: 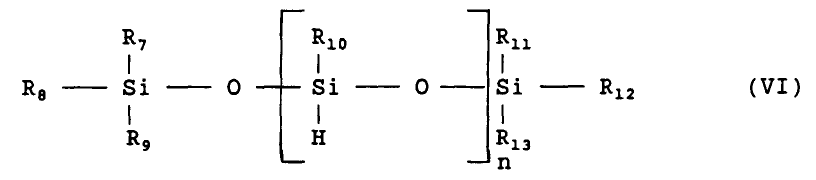 wherein R₇ to R₁₃ is each independently hydrogen or an organic group; preferably, R₇, R₈ and R₉ can be either hydrogen, alkyl, aryl, cycloalkyl, alkoxy, aryloxy or cycloalkoxy; R₁₀ is hydrogen, alkyl, aryl, cycloalkyl, alkoxy, aryloxy or cycloalkoxy; R₁₁ and R₁₂ are alkyl, aryl, cycloalkyl, alkoxy, aryloxy or cycloalkoxy and R₁₃ is hydrogen, alkyl, aryl, cycloalkyl, alkoxy, aryloxy or cycloalkoxy; n is an integer having a minimum value of about 4, and preferably 10 or higher. Such polyhydrosiloxanes, as is well-known to those skilled in the art, are commonly available from a number of companies including Dow Corning and Rhone Poulenc.

As will be appreciated by those skilled in the art, it is likewise possible to employ in place of the polysiloxanes described above, the corresponding analogs thereof in which at least part of the oxygen atoms is replaced by sulfur or nitrogen atoms.

Representative of suitable polymeric silicon hydrides are polymethylhydrosiloxane (PMHS); polydimethylsiloxane, terminated with an -SiH-group, methylhydrodimethylsiloxane copolymer; methylhydrophenyl-methylsiloxane copolymer; methylhydrocyanopropylsiloxane copolymer; methylhydromethyloctylsiloxane copolymer; poly(1,2-dimethylhydrosilazane); (1-methyl-hydrosilazane)(1,2-dimethylhydrosilazane) copolymer and methylhydrocyclosiloxane polymer.

In general, use is made of silicon-containing polymer having a number average molecular weight of 300 or higher, and preferably 300 to 10,000 (g/mol).

For several suitable silicon hydrides, useful in the process according to the invention, reference can be made to USP 5,359,113.

Compounds which have the requirement of "unsaturation" as well as the requirement of "hydrosilylation agent" in one molecule (i.e. in the molecule one or more -SiH-groups as well as one or more C=C-groups are available) are also suitable in the present invention. After the hydrosilylation process, a network structure results.

### 3) The catalyst

The catalyst, suitable for the hydrosilylation, is a catalyst based on a metal from groups 8-10 of the Periodic Table of Elements, including catalysts based on palladium, platinum or nickel. Catalysts which have been found to be particularly effective are (hydrated) chloroplatinic acid {H₂PtCl₆.xH₂O (x≥0)}, platinum/vinylsiloxane complexes {like K[Pt(C₂H₄)Cl₃]}, RhCl(PPh₃)₃ or dicobaltoctacarbonyl {Co₂(CO)₈}. Preference is given to platinum containing catalysts. Such catalysts are described in the above mentioned USP 5,486,637.

### 4) The accelerator

The process of the present invention is performed under the influence of a specific accelerator, having the formula

D₄₋ₙ - C - Xₙ (I)

wherein:
- Xₙ =: one or more halides, selected from the group of Cl or Br
- D₄₋ₙ =: one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.
The accelerator is therefor a halogenated organic compound. Examples include trichloroacetic acid or its esters, hexachloroaceton, hexachloropropylene, α-trichlorotoluene or perchlorocrotonic acid.

A preference is given to the use of an accelerator with a low halogen content, preferably having the formula: 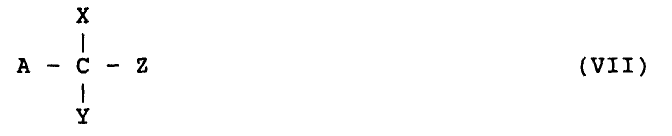 where
- A: is a phenyl group which may contain one or two substituents halogen atoms or alkyl groups, or is a thienyl, furyl, pyrollyl, N-alkyl pyrollyl or pyridyl group, which group is bound to the carbon atom directly or via a carbonyl group, or A is a phenyl or benzoyl group with one or two substituent nitro groups,
- X: is a chlorine or bromine atom,
- Y: is a chlorine, bromine or hydrogen atom or a hydrocarbon group with 1-8 carbon atoms, and
- Z: is a group of any one of the following formulas 1-11, in which both R and R' are hydrogen or a hydrocarbon group with 1-8 carbon atoms, and X is a chlorine or bromine atom: 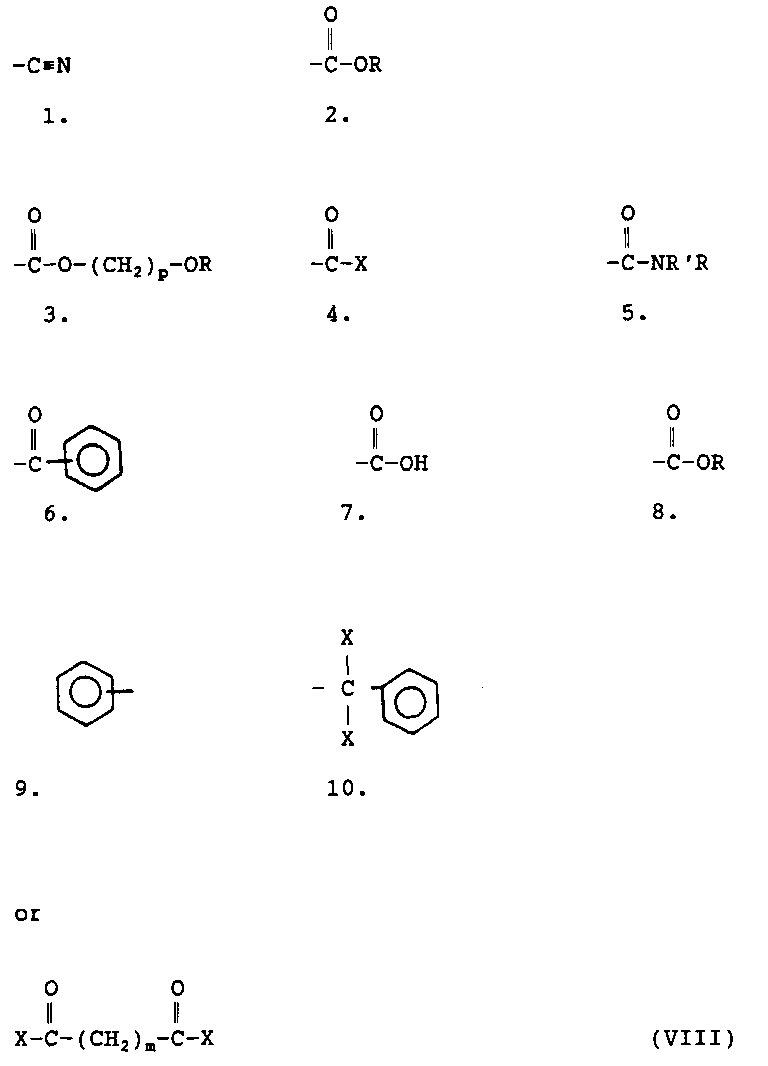
Preferably, m is in the range of 0-8, and p is in the range of 1-8.
More preferred, the accelerator has the formula: 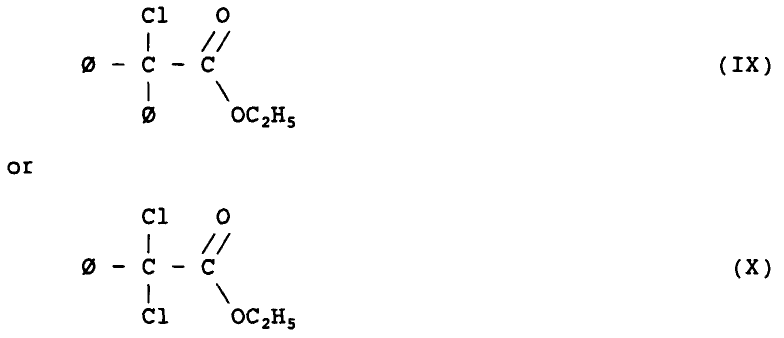 in which "Ø" represents a (substituted) phenyl group. They have specifically proven to be able to improve the reactivity and the efficiency of the hydrosilylation catalyst.

The accelerator can also form part of the ligand system of the hydrosilylation catalyst, i.e. in such a case the accelerator is a ligand of the catalyst.

The invention also relates to a composition, useful in a hydrosilylation, comprising a hydrosilylation catalyst, comprising a metal compound of group 8-10 of the Periodic Table, wherein the composition also comprises an accelerator having the formula:

D₄₋ₙ - C - Xₙ (I)

wherein:
- Xₙ =: one or more halides, selected from the group of Cl or Br
- D₄₋ₙ =: one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.

In the composition preferably an accelerator with a low halogen content is present, and preferably having the formule VII, previously described.

A preference is given to the composition being in the form of a solution; this can be easily processed during the hydrosilylation process. Unexpectedly it has been found that such a composition is also much more storage-stable than a composition, in which the accelerator is not present. In such a latter situation the catalytic activity of the catalyst decreases in time during storage, whereas a composition of the present invention maintains its activity over a long period of time.

As may be the case, the hydrosilylating compound and the unsaturated compound may be monomeric or polymeric in nature or mixtures thereof. Preference is given to both compounds being polymeric in nature, as a result of which a branched polymer results. In that case a plurality of polymeric arms are linked to a polymeric, silicon-based backbone.

### 5) The process conditions

The hydrosilylation reaction can be carried out in accordance with a variety of reaction conditions as described in the art. It is generally possible, and sometimes desirable, to carry out the reaction in the presence of a solvent such as aliphatic hydrocarbons (such as pentane, hexane, heptane, pentamethylheptane or distillation fractions); aromatic hydrocarbons (such as benzene or toluene); halogenated derivatives of aliphatic or aromatic hydrocarbons (such as tetrachloroethylene) or ethers (such as tetrahydrofuran or dioxane). The relative amounts of the unsaturated compound and the hydrosilylating compound can be controlled to ensure that the desired number of unsaturated compounds become linked by the addition reaction to the hydrosilylating compound. The solution reaction is generally carried out at a concentration of 2 to 50 weight percent of unsaturated compound. The reactants are ratioed according to the moles of unsaturation (C=C) in the unsaturated compound to the moles of Si-H bonds in the hydrosilylating compound. A molar excess of the unsaturated compound ensures, especially when polyolefin arms are linked to a polymer backbone, an efficient coupling. In general, mole ratios ranging from 1:100 to 10:1 are employed.

The reaction temperature is not a critical variable, and depends somewhat on the reactants used in carrying out the coupling reaction. Preferably, temperatures ranging from 15 to 300°C, and more preferred between 70 and 240°C, are used for that purpose. Similarly, the reaction time is likewise not critical and depends on the reactants employed. As a general rule, reaction times range from 10 sec. up to 300 hours.

The molar ratio between the accelerator and the metal in the catalyst is generally between 0.01 and 100; more preferred, this ratio is between 0.1 and 50; even more preferred between 1 and 25.

The hydrosilylation process can be controlled by proper admixture of ingredients. When using polymeric silicon hydrides, this can also be done by the addition of blocking agents which prevent the progress of further hydrosilylation. As blocking agents α-alkenes can be used.

The following examples and comparative experiments are provided to elucidate the invention.

### Examples of the different reaction conditions for hydrosilylation with and without accelerator

### Comparative Experiment A

An ethylene/propylene copolymer (Mₙ = 20,000, MWD = 2.2, 59 mole% C₂) containing one terminal unsaturation per polymer chain was dissolved in toluene (10 wt.%). A PMHS containing an average of 48 SiH groups per molecule was added to the polymer solution to provide a molar ratio of SiH to C=C in the polymer of 5/1. Then H₂PtCl₆.6H₂O, dissolved in isopropanol was added in a molar ratio of Pt to C=C in the polymer of 1/1000. The reaction mixture was subsequently heated to 90°C. The reaction mixture was stirred at 90°C for 72 hours. After this time interval, the reaction was blocked with an excess of 1-octene. The polymer recovered after evaportion of the solvent under vacuum at 80°C was analyzed with SEC-DV to have a weight average molecular weight (M_{w}) of 165 kg/mole.

### Example I

The same procedure as in Comparative Experiment A was followed except that before the addition of the platinum catalyst dichlorophenyl acetic acid ethyl ester (DCPAE) was added to provide a molar ratio of DCPAE to platinum in the catalyst of 16. After 72 hours reaction time, the reaction was blocked with an excess of 1-octene. The polymer recovered after evaporation of the solvent under vacuum at 80°C was analyzed with SEC-DV to have a M_{w} of 300 kg/mole.

### Examples of catalyst ageing with and without accelerator

### Examples of experiments with fresh catalyst solution

### Example II

An ethylene/propylene copolymer (Mₙ = 24,000, MWD = 2.5, 63 mole% C₂) containing one terminal unsaturation per polymer chain was dissolved in pentamethylheptane (10 wt.%). A PMHS containing an average of 48 SiH groups per molecule was added to the polymer solution to provide a molar ratio of SiH to C=C in the polymer of 5/1. The reaction mixture was subsequently heated to 130°C. Then H₂PtCl₆.6H₂O, dissolved in isopropanol, was mixed with DCPAE to provide a molar ratio of DCPAE to platinum in the catalyst of 4. Afterwards the catalyst solution was added to the polymer solution in a molar ratio of Pt to C=C in the polymer of 1/1000. The reaction mixture was stirred at 130°C for 40 minutes. After this time interval, the reaction was blocked with an excess of 1-decene. The polymer recovered after evaporation of the solvent under vacuum at 80°C was analyzed with SEC-DV to have a M_{w} of 170 kg/mole.

### Example III and Comparative Experiment B

The DCPAE containing catalyst solution, obtained in Example II, was stored at room temperature together with another catalyst solution of H₂PtCl₆.6H₂O in the same concentration, but without DCPAE, under equal conditions. After 3 days the catalyst solution without the DCPAE was colorless and metal platinum was lying at the bottom. This catalyst proved to be not active for hydrosilylation reactions. On the other hand the DCPAE containing catalyst solution was stored during 38 days and tested again under the same conditions as described in Example II. The polymer recovered after evaporation of the solvent under vacuum at 80°C was analyzed with SEC-DV to have a M_{w} of 165 kg/mole. This indicates that addition of an accelerator can prolong the storage time of hydrosilylation catalyst solutions extensively without loss of activity.

### Comparative Experiment C; with a compound containing only an ester functionality and no chlorine groups

An ethylene/propylene copolymer (Mₙ = 20,000, MWD = 2.3, 71 mole% C₂) containing one terminal unsaturation per polymer chain was dissolved in pentamethylheptane (10 wt.%). A PMHS containing an average of 48 SiH groups per molecule was added to the polymer solution to provide a molar ratio of SiH to C=C in the polymer of 5/1. The reaction mixture was subsequently heated to 130°C. Then H₂PtCl₆.6H₂O, dissolved in isopropanol, was mixed with phenyl acetic acid ethyl ester (=PAE) to provide a molar ratio of PAE to platinum in the catalyst of 10. Afterwards the catalyst solution was added to the polymer solution in a molar ratio of Pt to C=C in the polymer of 1/1000. The reaction mixture was stirred at 130°C for 15 minutes. After this time interval, the reaction was blocked with an excess of 1-decene. The polymer recovered after evaporation of the solvent under vacuum at 80°C was analyzed with SEC-DV to have a M_{w} of 73 kg/mole.

### Example IV

The copolymer from Comparative Experiment C was dissolved in pentamethylheptane (10 wt.%). A PMHS containing an average of 48 SiH groups per molecule was added to the polymer solution to provide a molar ratio of SiH to C=C in the polymer of 5/1. The reaction mixture was subsequently heated to 130°C. Then H₂PtCl₆.6H₂O, dissolved in isopropanol, was mixed with monochlorodiphenyl acetic acid ethyl ester (MCDPAE) to provide a molar ratio of MCDPAE to platinum in the catalyst of 10. Afterwards the catalyst solution was added to the polymer solution in a molar ratio of Pt to C=C in the polymer of 1/1000. The reaction mixture was stirred at 130°C for 15 minutes. After this time interval, the reaction was blocked with an excess of 1-decene. The polymer recovered after evaporation of the solvent under vacuum at 80°C was analyzed with SEC-DV to have a M_{w} of 115 kg/mole.

## Claims

1. Process for the hydrosilylation, with a hydrosilylating compound, of an unsaturated compound under the influence of a catalyst, containing a metal compound of group 8-10 of the Periodic Table of Elements, and an accelerator, characterized in that the accelerator is a compound having the formula:
D₄₋ₙ - C - Xₙ
wherein:
Xₙ = one or more halides, selected from the group of Cl or Br
D₄₋ₙ = one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.

2. Process according to claim 1, characterized in that the molar ratio between the accelerator and the metal in the catalyst is between 0.1-50.

3. Process according to anyone of claims 1-2, characterized in that the unsaturated compound is of a polymeric nature.

4. Process according to anyone of claims 1-3, characterized in that the accelerator has the formula 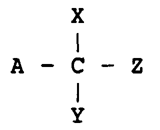 where
A is a phenyl group which may contain one or two substituents halogen atoms or alkyl groups, or is a thienyl, furyl, pyrollyl, N-alkyl pyrollyl or pyridyl group, which group is bound to the carbon atom directly or via a carbonyl group, or A is a phenyl or benzoyl group with one or two substituent nitro groups,
X is a chlorine or bromine atom,
Y is a chlorine, bromine or hydrogen atom or a hydrocarbon group with 1-8 carbon atoms, and
Z is a group of any one of the following formulas 1-11, in which both R and R' are a hydrocarbon group with 1-8 carbon atom, and X is a chlorine or bromine atom:

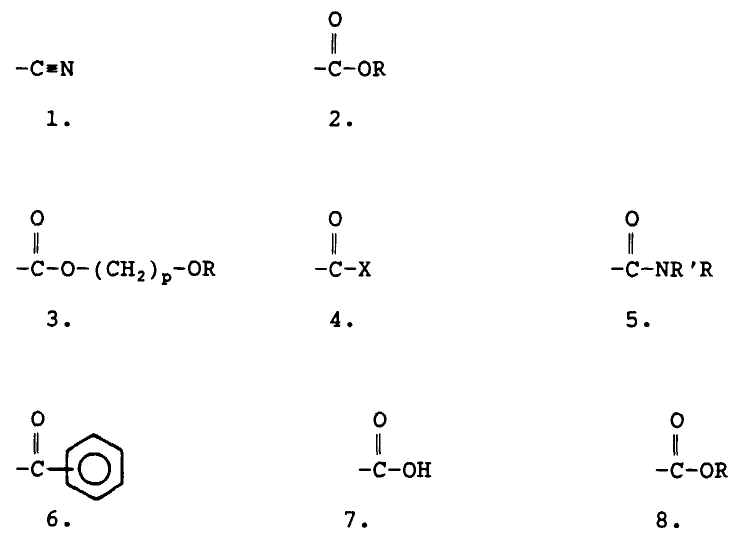

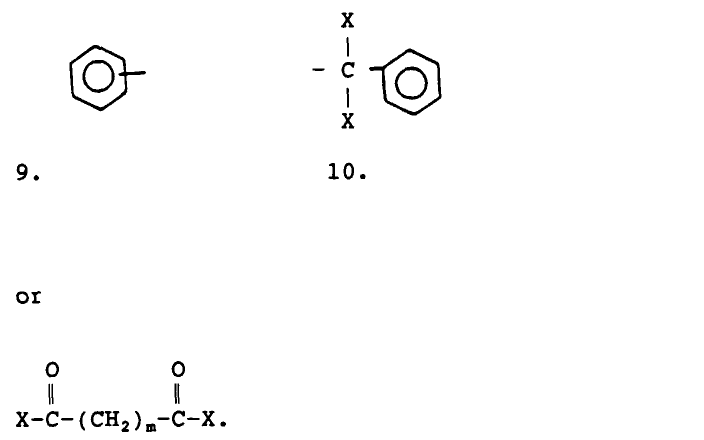

5. Process according to claim 4, characterized in that the accelerator has the formula 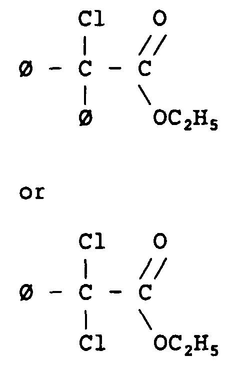 in which "Ø" represents a (substituted) phenyl group.

6. Process according to anyone of claims 1-5, characterized in that the hydrosilylation is performed at a temperature of between 15 and 300°C.

7. Process according to anyone of claims 1-6, characterized in that the catalyst is a platinum containing catalyst.

8. Process according to claim 7, characterized in that the platinum containing catalyst is selected from (hydrated) chloroplatinic acid and platinum/vinylsiloxane complexes.

9. Composition comprising a hydrosilylation catalyst, a catalyst comprising a metal compound of group 8-10 of the Periodic Table of Elements, characterized in that the composition also comprises a compound having the formula
D₄₋ₙ - C - Xₙ
wherein:
Xₙ = one or more halides, selected from the group of Cl or Br
D₄₋ₙ = one or more substituents, selected from:
- hydrogen,
- halogen,
- an (halogenated) alkyl, alkenyl, aryl, aralkyl or cycloalkyl containing group,
- a carboxy, carbonyl, oxycarbonyl or alkoxy containing group,
1 ≤ n ≤ 4.

10. Composition according to claim 9, characterized in that the composition is in the form of a solution.

11. Process according to anyone of claims 1-10, characterized in that a composition according to anyone of claims 9-10 is used.

12. Process according to claim 3, characterized in that the unsaturated compound is a polyolefin.

13. Process according to claim 12, characterized in that the polyolefin contains predominantly terminal unsaturations.
